# EUROPEAN PATENT APPLICATION

(11) **EP 1 710 800 A2**
(43) Date of publication of application: **11.10.2006**
(21) Application number: 06251907.9
(22) Date of filing: 05.04.2006
(51) Int. Cl.: G11B 20/18

(54) **An information recording and reproducing apparatus**

(30) Priority: 07.04.2005 JP 2005111237
(71) Applicant: Ricoh Company, Ltd., Tokyo 143-8555 (JP)
(72) Inventor: Motohashi, Tsutomu, Komae-shi Tokyo (JP)
(74) Representative: Mounteney, Simon James

(57) **Abstract**

An information recording and reproducing apparatus is disclosed. When a dual layer DVD disk is to be ejected before formatting is completed, the information recording and reproducing apparatus provides a middle area adjacent to a formatted area of the first recording layer, a middle area in the second recording layer at a position corresponding to the middle area of the first recording layer, and a dummy data area in the second recording layer at a position corresponding to the formatted area of the first recording layer. The areas outside of the middle areas are left blank.

## Description

### BACKGROUND OF THE INVENTION

### 1. Field of the Invention

The present invention relates to an information recording and reproducing apparatus for information writing into and reading of a recording medium that has two or more recording layers.

### 2. Description of the Related Art

As a standard of logical formatting of a rewritable recording medium, Mt. Rainier is specified.

A feature of Mt. Rainier is that a spare area is provided for use when a defect is detected on the recording medium.

For example, in a DVD+RW disk, the spare area is provided at the innermost circumference and the outermost circumference of the disk. The spare area of the innermost circumference is smaller than the spare area of the outermost circumference, and since a spare area corresponding to a defective position is beforehand specified, almost all the defective areas are spared by the spare area of the outermost circumference.

With the DVD+RW disk, a user is able to write data before completing a formatting process (a process to logically initialize the disk before the user can write data).

Further, it is also possible to take out the disk before completing the formatting process.

When ejecting the disk before formatting is complete, an accessible area should be up to a position to which formatting has been carried out, or the outermost circumference of user data.

Conventionally, an information recording and reproducing apparatus is available, wherein data in the spare area are duplicated in a user data area when the recording medium is taken out before completing the formatting process, for example, Patent Reference 1.

[Patent reference 1] JPA 2004-227737

### [Description of the Invention]

### [Problem(s) to be solved by the Invention]

However, according to the conventional information recording and reproducing apparatus, a problem is in that when taking out the disk before formatting completion, the data that are spared in the spare area of the outermost circumference have to be moved to the accessible area; if the volume of the data is great, it takes a long time to duplicate, that is, it takes a long time before the disk may be ejected.

Further, a new recording medium that has two or more recording layers is being studied. Since storage capacity of such recording medium becomes greater, defects may increase. Therefore, the time before the recording medium may be ejected, in the case that formatting is not completed, will become much longer.

### SUMMARY OF THE INVENTION

In view of the problems described above, the present invention provides an information recording and reproducing apparatus that shortens the time required before ejecting a recording medium having two or more recording layers shaped like a disk, where formatting is not completed, thereby substantially obviating one or more of the problems caused by the limitations and disadvantages of the related art.

Features of embodiments of the present invention are set forth in the description that follows, and in part will become apparent from the description and the accompanying drawings, or may be learned by practice of the invention according to the teachings provided in the description. Problem solutions provided by an embodiment of the present invention will be realized and attained by an information recording and reproducing apparatus particularly pointed out in the specification in such full, clear, concise, and exact terms as to enable a person having ordinary skill in the art to practice the invention.

### [Means for solving the Problem]

To achieve these solutions and in accordance with an aspect of the invention, as embodied and broadly described herein, an embodiment of the invention provides an information recording and reproducing apparatus as follows.
(1) The information recording and reproducing apparatus includes a writing and reading unit for writing information into and reading information from a recording medium which recording medium has two or more writable recording layers in the shape of a disk, a spare area provided in the inner circumference of each recording layer for sparing (providing a spare area for data to be written onto} for a defective area.
(2) The information recording and reproducing apparatus as described in (1) above, wherein the size (capacity) of the spare area is different from another spare area.
(3) The information recording and reproducing apparatus as described in (1) above, wherein a position of the spare area of each recording layer is different from other spare areas.
(4) An information recording and reproducing apparatus including a writing and reading unit for writing information into and reading information from a recording medium that has two or more recording layers in the shape of a disk, wherein a spare area for sparing for a defective area is arranged on a side from which writing is started.

### [Effect of the Invention]

According to the information recording and reproducing apparatus of the embodiment of the present invention, the time required before ejecting the recording medium that has two or more recording layers in the shape of a disk, which recording medium is not completely formatted, is shortened.

### BRIEF DESCRIPTION OF THE DRAWINGS

Fig. 1 is a block diagram of an information recording and reproducing system that includes an information recording and reproducing apparatus 1 according to an embodiment of the present invention;
Fig. 2 is a data map of formatting a dual layer DVD disk according to a first embodiment of the present invention;
Fig. 3 is a data map of formatting the dual layer DVD disk when ejecting the dual layer DVD disk formatted according to the first embodiment;
Fig. 4 is a data map of formatting the dual layer DVD disk according to a second embodiment of the present invention;
Fig. 5 is a data map of formatting the dual layer DVD disk according to a third embodiment of the present invention;
Fig. 6 is a data map of formatting a dual layer DVD disk according to a fourth embodiment of the present invention; and
Fig. 7 is a flowchart showing a formatting process of the dual layer DVD disk of the information recording and reproducing apparatus 1 shown in Fig. 1.

### DESCRIPTION OF THE PREFERRED EMBODIMENTS

In the following, embodiments of the present invention are described with reference to the accompanying drawings.

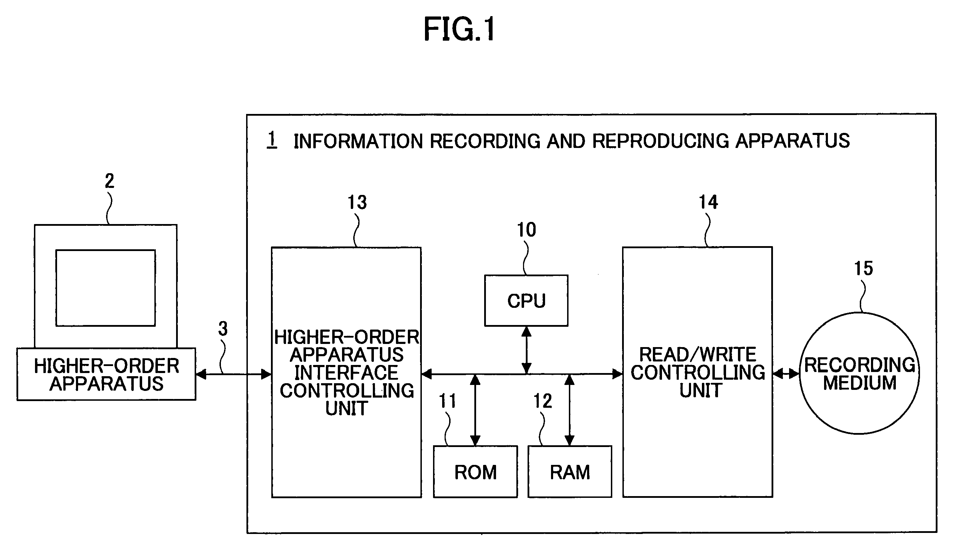

Fig. 1 is a block diagram of an information recording and reproducing system that includes an information recording and reproducing apparatus 1 according to an embodiment of the present invention.

The information recording and reproducing apparatus 1 is connected to a higher-order apparatus 2 through a communication line 3.

The information recording and reproducing apparatus 1 is an optical disk apparatus including a DVD drive, a CPU 10, a ROM 11, a RAM 12, a higher-order interface (I/F) controlling unit 13, and a read/write controlling unit 14.

The CPU 10 is a microprocessor that controls the information recording and reproducing apparatus 1, including performing a formatting process and an informational (data) R/W process on a recording medium 15 by executing a control software program stored in the ROM 11. That is, the CPU 10 carries out functions of functional elements of the information recording and reproducing apparatus 1.

The ROM 11 is a memory that stores the control software program for the CPU 10 to execute.

The RAM 12 is a memory for temporarily storing data read from the recording medium 15 and data to be written in the recording medium 15, and when the CPU 10 performs various kinds of processes by executing the control software program.

The higher-order I/F controlling unit 13 controls transmission and reception of a command and various kinds of data to and from the higher-order apparatus 2 through the communication line 3.

The read/write controlling unit 14 controls writing and reading of data into and from the recording medium 15.

The recording medium 15 is an optical disk including the DVD+RW disk for storing user data.

The higher-order apparatus 2 is, for example, a personal computer that includes a CPU, a ROM, and a RAM and controls the information recording and reproducing apparatus 1.

Next, disk formatting of the recording medium 15, which is assumed to be, e.g., a dual layer DVD disk is described.
(1) The first embodiment of disk formatting of the dual layer DVD disk

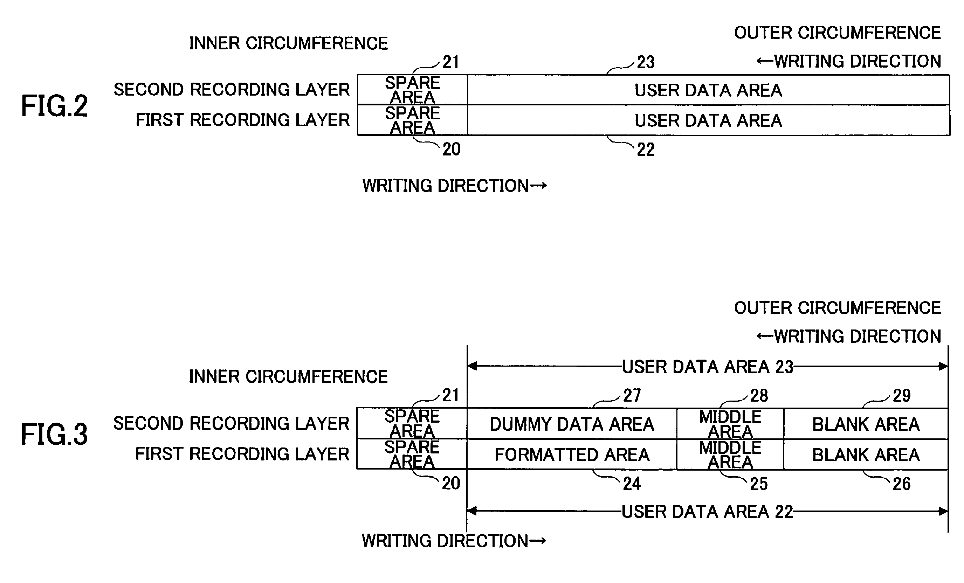

Fig. 2 is a data map of formatting the dual layer DVD disk according to the first embodiment of the present invention.

The dual layer DVD disk includes two recording layers in the shape of a disk, onto which layers data are written; the second recording layer indicated in Fig. 2 is laid on the disk substrate, and the first recording layer is stuck on the second recording layer. That is, the first recording layer is closer than the second recording layer to an optical system that irradiates a laser beam for reading and writing data.

In the case where an opposite track path (OTP) method is used for writing the dual layer DVD disk (the OTP method is adopted as standard for writing a dual layer DVD+RW disk), writing and reading are performed from inner circumference to outer circumference of the disk for the first recording layer; and in the reverse direction for the second recording layer. That is, the directions of information reading and writing are reversed between the first recording layer and the second recording layer.

According to the first embodiment, spare areas 20 and 21 for sparing (providing a spare area for data to be recorded onto) for a defective area are provided in the inner circumferences of the first recording layer and the second recording layer. Arrangement positions of the spare areas 20 and 21 are the same in the respective inner circumferences, and the area sizes are the same. Further, the remaining areas of the first recording layer and the second recording layer are user data areas 22 and 23, respectively, for recording user data.

When a defect is detected during writing onto the first recording layer during a formatting process of the dual layer DVD disk, the CPU 10 assigns a spare area (an alternative area to record data when an ordinary area is defective) in the spare area 20 of the first recording layer. If there is no opening in the spare area 20 of the first recording area, the spare area is assigned in the second recording area 21.

Next, in the case that the dual layer DVD disk is formatted only partially, i.e., constituting a formatted area 24, but is not completely formatted when the disk is to be ejected, CPU 10 writes onto a middle area 25 immediately subsequent to the formatted area 24, for example, as shown in Fig. 3.

Further, CPU 10 writes dummy data on the second recording layer at a position corresponding to the formatted area 24 of the first recording layer, and provides a middle area 28.

Specifically, in the second recording layer, the middle area 28 is provided at a position corresponding to the middle area 25 of the first recording layer.

The middle areas 25 and 28 are located outside of the user data area, and contain no effective information other than address information.

Further, when the dual layer DVD disk, formatted as described above and having a portion with no data in an accessible range, is played with a reproduction apparatus (that is capable of only reproducing), unusual operations may be caused; for this reason, it is specified that a predetermined quantity of data be written outside (outboard) of the user data. For this reason, the middle areas 25 and 28 are provided.

Furthermore, the CPU 10 writes dummy data in the position corresponding to the formatted area 24 of the first recording layer, and makes the position a dummy data area 27.

Further, areas outboard of the middle areas 25 and 28, which are not formatted, are kept blank and are called blank areas 26 and 29, respectively.

Since the spare area of each recording layer is arranged on the inner side of the dual layer DVD disk as described above, when ejecting a disk that is not completely formatted, it is unnecessary to move the spare area.

Therefore, when ejecting the disk, the formatting of which is not completed, it is unnecessary to move the spared data; disk ejecting time is shortened by the corresponding time.
(2) The second embodiment of disk formatting of the dual layer DVD disk

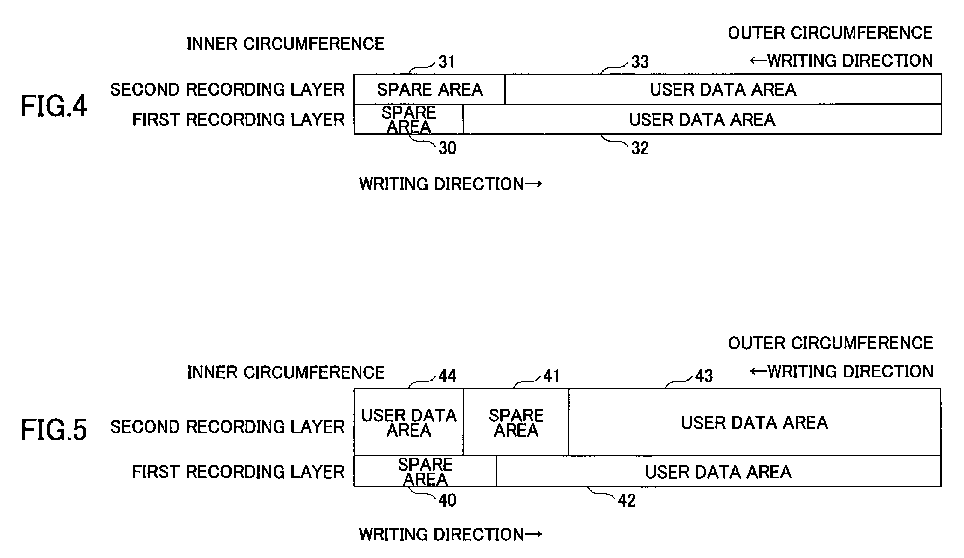

Fig. 4 is a data map of formatting the dual layer DVD disk according to the second embodiment of the present invention.

Spare areas 30 and 31 are provided on the inner side of the first recording layer and the second recording layer, respectively, for substituting for a defective area in one of the recording layers like the first embodiment; however, the size of the spare area 30 is different from size of the spare area 31. In this example, the spare area 31 of the second recording layer is made greater than the spare area 30 of the first recording layer. Accordingly, sizes of user data areas 32 and 33, which remain in the first recording layer and the second recording layer, respectively, also differ.

By arranging the spare areas having different sizes in the recording layers as described above, a situation wherein a defect in the spare area of the first recording layer disables the use of all the spare areas of the second recording layer located under the first recording layer is prevented from occurring.

In other words, if a big crack is generated in the first recording layer that is closer to the optical system than the second recording layer, access to the second recording layer at the same radial position becomes impossible; however, since the spare area sizes are different, it is possible to access the portion of the spare area of the second recording layer that does not overlap the spare area of the first recording layer.

The dual layer DVD disk that is formatted according to the second embodiment can be ejected in the middle of formatting in a short time, and avoids a situation wherein all the spare areas of the recording layer cannot be used due to one defect of the disk.
(3) The third embodiment of disk formatting of the dual layer DVD disk

Fig. 5 is a data map of formatting the dual layer DVD disk according to the third embodiment of the present invention, wherein spare areas 40 and 41 are provided on the inner side of the first recording layer and the second recording layer, respectively, for substituting a defective area in one of the recording layers like the first embodiment; however, both starting positions and ending positions of the spare areas 40 and 41 are different. In this example, the spare area 40 of the first recording layer is located on the innermost circumference side, and the spare area 41 of the second recording layer starts at a little outboard of the innermost side. In addition, sizes of the spare areas 40 and 41 may be different, in which case, the spare area 40 should be arranged so as not to fully cover the spare area 41.

Accordingly, as for the first recording layer, all the remaining area starting at the end of the spare area 40 is a user data area 42; and as for the second recording layer, user data areas 43 and 44 are arranged on opposite sides (inner side and outer side) of the spare area 41.

That is, the spare areas of the recording layers are arranged such that a part or all thereof is shifted.

Since the spare areas of the recording layers are arranged being mutually shifted, a defect in the spare area of the first recording layer does not disable all of the spare area of the second recording layer located under the first recording layer.

The dual layer DVD disk formatted according to the third embodiment can be ejected in the middle of formatting in a short time, and avoids having a fault to cause all the spare areas of the recording layers to become unavailable.
(4) The fourth embodiment of disk formatting of the dual layer DVD disk

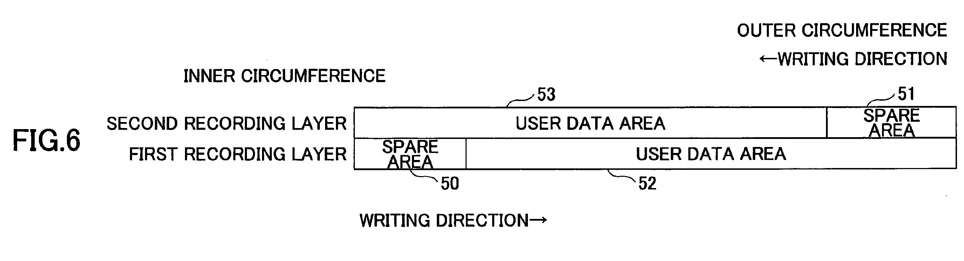

Fig. 6 is a data map of formatting the dual layer DVD disk according to the fourth embodiment of the present invention, wherein, unlike the first through third embodiments, a spare area 50 of the first recording layer for substituting for a defective area is provided at the innermost circumference, and a spare area 51 of the second recording layer for substituting for a defective area is provided at the outermost circumference. Here, the sizes of the spare areas 50 and 51 may be the same or different.

In other words, the spare areas for substituting for a defective area are provided on the respective record starting sides. That is, the spare area 50 of the first recording layer, wherein writing starts at the innermost circumference, is provided at the innermost circumference; and the spare area 51 of the second recording layer, wherein writing starts at the perimeter, is provided at the outermost circumference. Further, remaining areas of the first recording layer and the second recording layer are turned into user data areas 52 and 53, respectively.

Since the spare areas are provided on the respective record starting sides of the recording layers, even if a defect is present in the spare area 50 of the first recording layer, the spare area 51 of the second recording layer is available.

Further, if it is arranged such that the spare area 51 of the second recording layer is not used until the first recording layer is completely formatted, there is no necessity of moving data stored in the spare area when ejecting the disk, the formatting of which is not completed.

The dual layer DVD disk formatted according to the fourth embodiment can be ejected in the middle of formatting in a short time, and can avoid having a fault to cause all the spare areas of each recording layer to become unavailable.

Next, a formatting process performed by the information recording and reproducing apparatus 1 of the dual layer DVD disk is described, the formatting process being common to the first through the fourth embodiments.

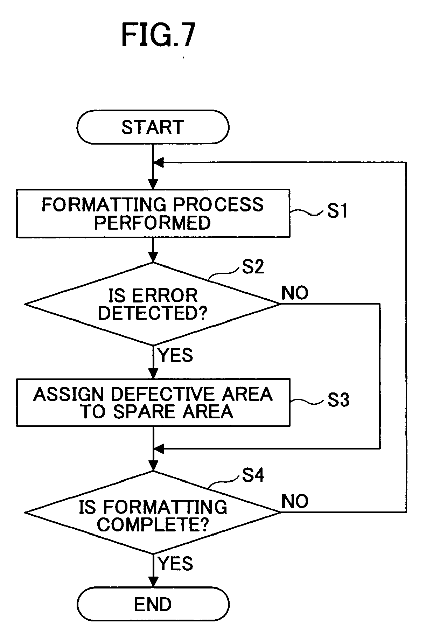

Fig. 7 is a flowchart showing the formatting process of the dual layer DVD disk performed by the information recording and reproducing apparatus 1 shown in Fig. 1.

At Step S1, the CPU 10 performs formatting of a recording medium 15, which is a dual layer DVD disk, wherein data are written, the data are read, and an error, if any, is detected after formatting. At Step S2, whether an error is detected is determined. If a defect is not detected, the process advances to Step S4 wherein whether the formatting process is completed for all the areas of the dual layer DVD disk is determined. If a defect is found at Step S2, the defective area is assigned to the spare area at Step 3; then, the process progresses to Step S4. If the determination at Step S4 is negative, the process returns to Step S1, and the process described above is repeated. If the determination is affirmative, the formatting process is finished.

### [Availability to industry]

The information recording and reproducing apparatus according to the present invention is applicable to apparatuses at large for writing information on a recording medium that has two or more recording layers in the shape of a disk.

Further, the present invention is not limited to these embodiments, but variations and modifications may be made without departing from the scope of the present invention.

## Claims

1. An information recording and reproducing apparatus, comprising:
a reading and writing unit for reading and writing information in a recording medium that has a plurality of recording layers which layers are shaped like a disk, wherein a spare area is assigned to an inner circumference area of each of the recording layers for substituting for a defective area.

2. The information recording and reproducing apparatus as claimed in claim 1, wherein
a size of the spare area of one of the recording layers is different from the size of the spare area of another of the recording layers.

3. The information recording and reproducing apparatus as claimed in claim 1, wherein
an arrangement position of the spare area of one of the recording layers is different from an arrangement position of the spare area of another of the recording layers.

4. An information recording and reproducing apparatus, comprising:
a reading and writing unit for reading and writing information in a recording medium that has a plurality of recording layers which layers are shaped like a disk, wherein a spare area for substituting for a defective area is provided on a side where recording is started.
